# EUROPÄISCHE PATENTSCHRIFT

(11) **EP 1 601 991 B1**
(45) Veröffentlichungstag und Bekanntmachung des Hinweises auf die Patenterteilung: **27.02.2008**
(21) Anmeldenummer: 03769188.8
(22) Anmeldetag: 15.09.2003
(51) Int. Cl.: G01S 13/93, G01S 7/282

(54) **VERFAHREN UND EINRICHTUNG ZUR ADAPTIVEN LEISTUNGSREGELUNG**
METHOD AND DEVICE FOR THE ADAPTIVE REGULATION OF POWER
PROCEDE ET DISPOSITIF DE RE GULATION ADAPTATIVE DE PUISSANCE

(30) Priorität: 26.11.2002 DE 10254982
(43) Veröffentlichungstag der Anmeldung: 07.12.2005
(73) Patentinhaber: ROBERT BOSCH GMBH, 70442 Stuttgart (DE)
(72) Erfinder: VOIGTLAENDER, Klaus, 73117 Wangen (DE); GAIER, Stefan, 70599 Stuttgart (DE); RUOSS, Hans-Oliver, 70569 Stuttgart (DE); SEIDEL, Juergen, 73655 Pluederhausen (DE)
(86) Internationale Anmeldenummer: PCT/DE2003/003063
(87) Internationale Veröffentlichungsnummer: WO 2004/048999

(56) Entgegenhaltungen:
- DE-A- 10 108 582
- DE-A- 19 707 936
- DE-A- 19 921 844
- US-A- 5 345 470
- US-A- 5 670 962
- US-A- 5 828 333

## Beschreibung

### Stand der Technik

Die Erfindung betrifft ein Verfahren und eine Einrichtung zur adaptiven Leistungsregelung gemäß den unabhängigen Ansprüchen 1 und 8.

Im Automotivbereich sind bereits Systeme im Einsatz oder noch in Entwicklung begriffen, bei denen Entfernungen und Geschwindigkeiten von Objekten rund um das eigene Fahrzeug unter Verwendung von Mikrowellen und Einsatz des Radar-Prinzips gemessen werden. Bei diesen Objekten kann es sich beispielsweise um ebenfalls am Straßenverkehr teilnehmende Fahrzeuge oder aber auch um irgendwelche Hindernisse auf oder neben der Straße handeln. Auch Systeme zum schlüssellosen Zugang zu einem Fahrzeug (keyless entry/comfort entry/go) bedienen sich der genannten Techniken. Bei bekannten Systemen wird Hochfrequenzenergie in einem Frequenzbereich im Gigahertzbereich, mit einer bei 24.125 GHz liegenden Mittenfrequenz und einer beidseitigen Bandbreite von mehreren GHz abgestrahlt. Typische Antennen haben eine Richtcharakteristik von 80 Grad * 20 Grad. In der Praxis liegt die Reichweite bei rund 20m. Bei derartigen Systemen besteht das Risiko, dass unzulässig hohe Signalpegel auch in zugunsten anderer Dienste gesperrten Frequenzbereichen auftreten. Beispielsweise in Frequenzbereichen, die für die Radioastronomie oder auch für Richtfunkdienste freigehalten werden. Unzulässig hohe Signalpegel können beispielsweise dann auftreten, wenn eine größere Anzahl der oben genannten Systeme, beispielsweise mehrere hundert, gleichzeitig in Betrieb genommen werden. Dies kann beispielsweise dann der Fall sein, wenn sich eine große Anzahl von Fahrzeugen auf mehrspurigen innerstädtischen Straßen fortbewegt. Ähnliche Probleme treten auf großen Parkplätzen vor Sportanlagen oder Einkaufszentren auf, wenn sich beispielsweise nach Beendigung einer Großveranstaltung Hunderte Fahrzeuge gleichzeitig in Bewegung setzen und den Parkplatz verlassen. Die genannten Probleme treten überwiegend nur im Stand oder bei relativ langsamer Geschwindigkeit auf. Bei höheren Geschwindigkeiten vergrößern sich nämlich die Abstände *zwischen den Fahrzeugen* wieder, und die Fahrzeugdichte nimmt entsprechend ab. Die räumliche Nähe vieler Sensoren verursacht weiterhin auch starke gegenseitige Störungen, die dazu führen, dass bei adaptiven Sensoren vermehrt zusätzliche Messungen durchgeführt werden, obwohl einige Ziele eigentlich schon sicher erkannt sind.

Aus DE 100 65 521 A1 der Anmelderin sind ein Verfahren und eine Vorrichtung zur Detektion von bewegten oder stehenden Objekten mittels Radarstrahlung, insbesondere für den Einsatz in Kraftfahrzeugen, bekannt, bei denen zur objektdetektion pulsmodulierte Trägerschwingungen ausgesandt, deren reflektierte Teile empfangen und ausgewertet werden. Durch das Senden eines unmodulierten Trägers in den zeitlichen Zwischenräumen zweier benachbarter Pulse ist es dabei möglich, zusätzlich noch eine Dopplermessung vorzunehmen, mit der eine zuverlässige Geschwindigkeitsmessung möglich ist.

Aus der noch nicht veröffentlichten Patentanmeldung R. 40543 der Anmelderin ist weiterhin ein Verfahren bekannt, bei dem Unregelmäßigkeiten beim Empfang von Signalen erkannt werden. Daraufhin wird der Sendezweig abgeschaltet. Somit werden keine Sendesignale mehr von der Sendeantenne ausgesandt. Allerdings werden weiterhin Korrelationsimpulse von einem Impulsgeber auf den Empfangszweig des Radarsensors gegeben. Stellt sich dabei heraus, dass nach wie vor Zielinformationen empfangen werden, muss auf ein Scheinziel geschlossen werden.

Die US-A 5,828,333 zeigt einen Radarsensor, bei welchem unter anderem die Sendeleistung reduziert wird, wenn erkannt wird, dass der Sendekanal von mehr als einem Teilnehmer belegt ist.

Die US 5,345,470 zeigt eine Vorgehensweise zur Minimierung von Indifferenzen bei FMCW-Radarsendern durch Leistungssteuerung. Dabei wird eine Reduzierung vorgenommen, für Anwendungen, in denen in einigen Winkeln weniger Leistung notwendig ist. Dabei wird zwischen unterschiedlichen Verkehrssituationen (Seitenaufprall, Frontalaufprall) unterschieden und entsprechend der Verkehrsituation die Sendeleistung reduziert.

### Vorteile der Erfindung

Die Erfindung geht von der Erkenntnis aus, dass die genannten Probleme durch eine adaptive Leistungsregelung vermieden oder zumindest verringert werden können. Sobald erkennbar wird, dass die Störungen infolge einer zu großen Fahrzeugdichte überhand nehmen, wird eine entsprechende Leistungsanpassung durchgeführt. Bei schon sicher erkannten Zielen kann vorzugsweise die Messwiederholrate verringert werden. Weiterhin muss die mögliche Detektionsreichweite nicht bis zum maximalen Wert ausgenutzt, sondern kann nach einer noch als zweckmäßig anzusehenden Grenze, von beispielsweise 2 bis 5 erkannten Zielen, abgebrochen werden, zumal der Leistungsbedarf mit der vierten Potenz der Entfernung ansteigt. Sofern eine Geschwindigkeit über Grund messbar ist, kann bei geringer Geschwindigkeit unter etwa 20 bis 40 km/h oder aber bei Stillstand und bei weit entfernten Zielen ebenfalls die Leistung dadurch verringert werden, dass die mittlere Leistung, die Messwiederholfrequenz oder die Maximalentfernung begrenzt werden. Dank der relativ niedrigen Geschwindigkeit ist dabei kaum damit zu rechnen, dass Ziele unerwartet auftauchen. Falls erforderlich, kann jedoch auch bis zum ersten Ziel noch eine Messung zwischendurch erfolgen, um auch diesen Raum noch abzusichern und damit die Sicherheit insgesamt zu erhöhen. Auf besonders vorteilhafte Weise kann die Geschwindigkeitsinformation aus den Raddrehzahlen, aus einer Radarmessung, die die Geschwindigkeit über Grund erfasst oder einer SRR-Messung durch Abschätzung von stehenden Zielen gewonnen werden. Während die ersten zwei genannten Methoden zu sehr zuverlässigen Ergebnissen führen, ist bei der letztgenannten Methode zusätzlich eine genaue Klassifikation in Scheinziele einerseits und reale bewegte Ziele andererseits erforderlich, um zu zuverlässigen Ergebnissen zu gelangen. Da bei einer hohen Fahrzeugdichte und somit hoher Konzentration von Sensoren die störenden Beeinflussungen zunehmen, diese jedoch erkannt werden können, ermöglicht die Erfindung auch eine adaptive Reduktion der Leistung in kürzerer Entfernung, sofern sicher erkannte Ziele vorliegen. Die Erfindung ermöglicht eine Verringerung der Sendeleistung, wodurch eine Zulassung nach UWB-Kriterien erleichtert wird. Durch die Verringerung der Sendeleistung, kann die Störfestigkeit weiter gesteigert werden. Das heißt, dass sich benachbarte Fahrzeuge weniger gegenseitig stören. Die verringerte Sendeleistung führt zu einem energetisch günstigen geringeren Stromverbrauch. Weiterhin ist, infolge der geringeren Belastung, auch mit einer höheren Lebensdauer zu rechnen. Durch erste Abschätzungen konnte nachgewiesen werden, dass bei Anwendung der erfinderischen Lösung, unter Annahme einer Maximalentfernung von 20 m und einem Abbrechen der Aussendungen in den Entfernungsstufen 5m, 10m oder 15 m, die mittlere Leistung um 30 db, 15 db, bzw. 6 dB reduziert werden könnte. Damit sinkt natürlich auch die spektrale Dichte. Zusätzlich könnte die ausgesandte Leistung um ca. 6 bis 20 dB gesenkt werden.

Vorteilhafte und zweckmäßige Ausgestaltungen und Weiterbildungen der Erfindung sind in den Unteransprüchen gekennzeichnet.

### Zeichnungen

Die Erfindung wird nachstehend anhand der in der Zeichnung dargestellten Ausführungsformen erläutert. Dabei zeigt:
- Figur 1: eine Radareinrichtung des Standes der Technik;
- Figur 2: ein Kraftfahrzeug mit Radareinrichtungen;
- Figur 3: in einem Diagramm ein Radarsignal einer Radareinrichtung;
- Figur 4: in einem Diagramm Radarsignale mit unterschiedlich starken Störungen;
- Figur 5: ein Blockdiagramm einer Radareinrichtung;
- Figur 6: ein erstes Ablaufdiagramm zur Leistungsreduzierung;
- Figur 7: ein zweites Ablaufdiagramm zur Leistungsreduzierung.

### Beschreibung der Ausführungsbeispiele

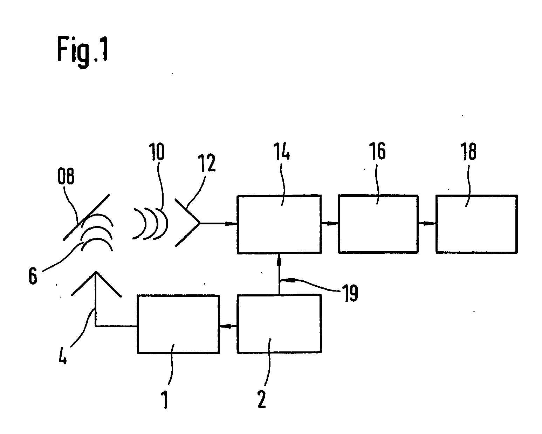

Figur 1 zeigt in einem Blockdiagramm eine Radareinrichtung mit einem Korrelationsempfänger nach dem Stand der Technik. Eine Sendeeinrichtung 1 wird durch einen Pulsgenerator 2 zur Abstrahlung eines Sendesignals 6 über eine Antenne 4 veranlasst. Das Sendesignal 6 trifft auf ein Zielobjekt 8, an dem es zumindest teilweise reflektiert wird und zur Empfangseinrichtung 14 zurück gelangt. Das Empfangssignal 10 wird von einer Antenne 12 empfangen. Dabei können Antenne 12 und Antenne 4 identisch sein und in Sende- und Empfangsbetrieb umgeschaltet werden. Nach dem Empfang des Empfangssignals 10 durch die Antenne 12 wird dieses Empfangssignal 10 an die Empfangseinrichtung 14 weitergeleitet und nachfolgend über eine Filtereinrichtung mit A/D-Wandlung 16 einer Auswerteeinrichtung 18 zugeführt. Eine Besonderheit bei einer derartigen Radareinrichtung mit Korrelationsempfänger besteht darin, dass die Empfangseinrichtung 14 von dem Pulsgenerator 2 ein Referenzsignal 20 erhält. Die von der Empfangseinrichtung 14 empfangenen Empfangssignale 10 werden in der Empfangseinrichtung 14 mit dem Referenzsignal 20 gemischt. Durch die Korrelation kann auf der Grundlage der zeitlichen Verzögerung von dem Aussenden eines Radarsignals bis zum Empfangen eines an einem Zielobjekt reflektierten Radarsignals beispielsweise auf die Entfernung eines Zielobjekts geschlossen werden.

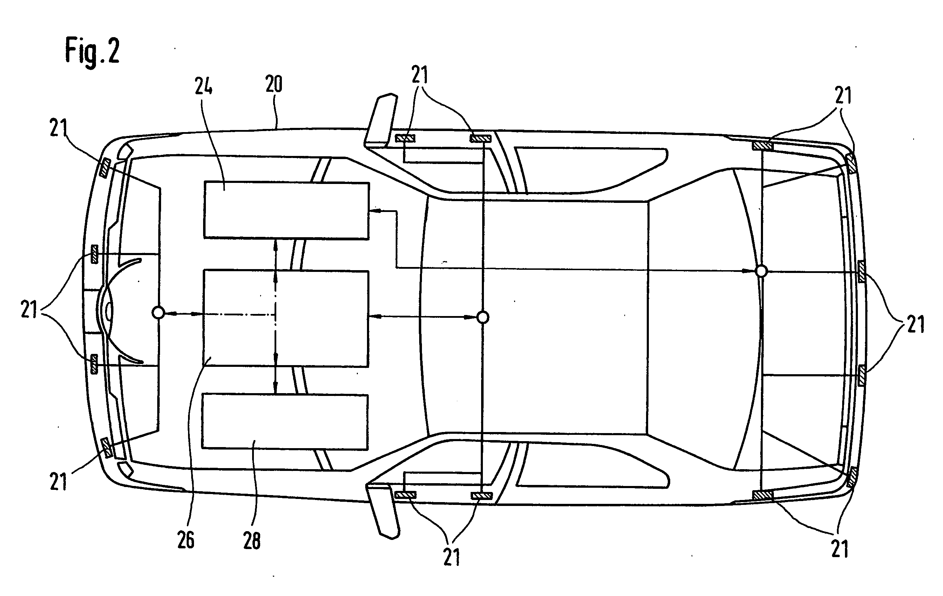

Es ist möglich, an einem Fahrzeug mehrere gleichartige, beispielsweise zwischen 4 und 16 Radarsensoren zu betreiben. Dies wird anhand von Figur 2 verdeutlicht, in der ein Kraftfahrzeug 20 mit einer Mehrzahl von Radarsensoren 21 dargestellt ist. Die Radarsensoren 21 sind vorzugsweise über ein Buskonzept untereinander und mit Steuerungs- und Kontrolleinrichtungen verbunden. So sind insbesondere eine Einrichtung 24 zur Bereitstellung einer Einparkhilfe und zur Detektion eines toten Winkels, eine Einrichtung 26 für die Precrash-Funktion, sowie eine Einrichtung 28 für die Erleichterung des Stop & Go-Verkehrs vorgesehen.

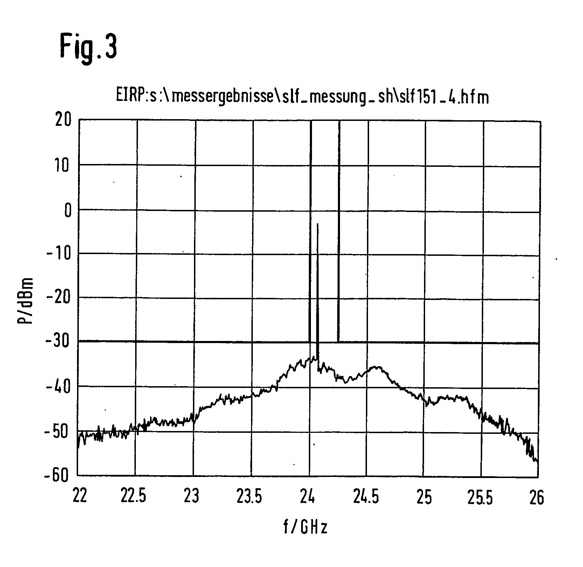

Figur 3 zeigt in einem Diagramm ein typisches Radarsignal, das von einer im Nahbereich arbeitenden Radareinrichtung ausgesandt wird. Bei einer derartigen Radareinrichtung wird Hochfrequenzenergie in einem Frequenzbereich im Gigahertzbereich, mit einer bei 24.125 GHz liegenden Mittenfrequenz und einer beidseitigen Bandbreite von mehreren GHz abgestrahlt.

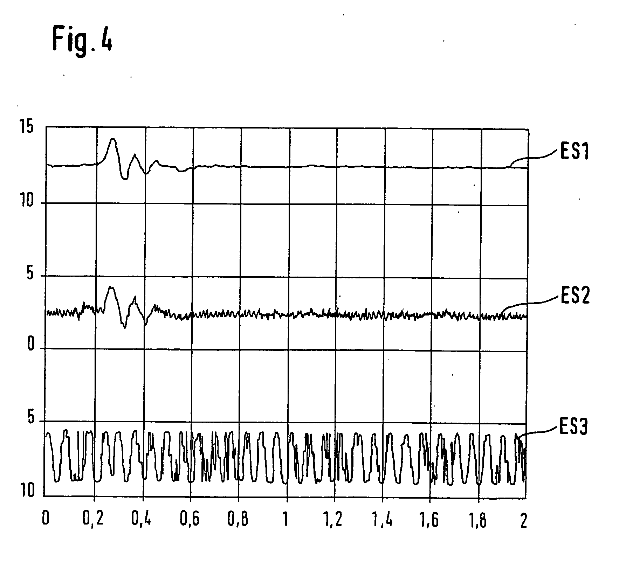

Figur 4 zeigt in einem Diagramm typische Empfangsignale, die von einer im Nahbereich arbeitenden Radareinrichtung aufgenommen worden sind. Der Verlauf des im Diagramm oben dargestellten ersten Empfangssignals ES1 ist im Wesentlichen ungestört. Der Verlauf des im mittleren Bereich des Diagramms dargestellten zweiten Empfangssignals ES2 ist durch eine starke Störung beeinflusst, die beispielsweise von einem FMCW-Radar verursacht sein könnte. Das im Diagramm unten dargestellte dritte Empfangssignal ES3 ist durch eine sehr starke Störung des gleichen Typs beeinträchtigt.

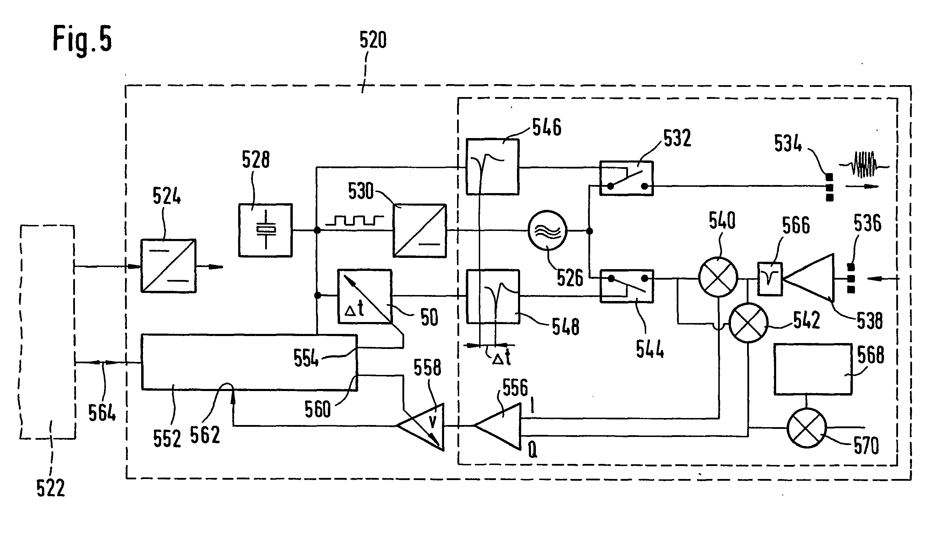

Figur 5 zeigt ein Blockdiagramm einer Radareinrichtung 520, die für die Überwachung des Nahbereichs um ein Kraftfahrzeug vorgesehen ist. Die Radareinrichtung 520 wird von einer Steuereinrichtung 522 mit Energie versorgt. So stellt die Steuereinrichtung 522 beispielsweise eine Eingangsspannung von 8 V für die Radareinrichtung 520 bereit. Diese Eingangsspannung wird einem DC-DC-Wandler 524 zugeführt, der eine Versorgungsspannung von beispielsweise 5 V für die Komponenten der Radareinrichtung 520 liefert. Die Radareinrichtung 520 umfasst weiter einen Lokaloszillator 526, der eine Trägerfrequenz von vorzugsweise 24 GHz erzeugt. Dieser Lokaloszillator wird mit einer Vorspannung versorgt, die mittels eines Wandlers 530 erzeugt wird, der durch von einem Taktgenerator 528 erzeugte Pulse angesteuert wird. Die von dem Taktgenerator 528 erzeugten Pulse, die beispielsweise eine Frequenz von einigen MHz, insbesondere 5 MHz, haben können, werden zur Modulation des von dem Lokaloszillator 526 bereitgestellten Trägersignals verwendet. Diese Modulation erfolgt im Sendezweig der Radareinrichtung 520 durch ein Schaltelement 532, das von einem Impulsformer 546 gesteuert wird. Der Impulsformer 546 wiederum wird ebenfalls mit der Taktfrequenz des Taktgenerators 528 angesteuert. Die auf diese Weise erzeugten gepulsten Signale werden von einer Antenne 534 abgestrahlt. Falls von der Antenne 534 abgestrahlte Signale, beispielsweise durch ein Zielobjekt, reflektiert werden, werden die reflektierten Signale von einer Antenne 536 empfangen. Nach Verstärkung der empfangenen Signale in einem Verstärker 538 werden die Signale zwei Mischern 540 und 542 zugeführt. Der erste Mischer 540 liefert dann ein sogenanntes I-Signal, während der zweite Mischer 542 ein um 90° verschobenes Q-Signal ausgibt. In den Mischern 540, 542 werden die empfangenen Signale mit den gepulsten Signalen des Lokaloszillators 526 gemischt, wobei dieses Pulsen über einen Schalter 544 erfolgt. Der Schalter 544 wird von einem Impulsgeber 548 angesteuert, der verzögerte Impulse ausgibt. Beispielsweise sind die von dem Impulsgeber 548 ausgegebenen Impulse um eine Zeit Δt gegenüber den Impulsen des Impulsgebers 546 verzögert. Diese Verzögerung wird durch eine Verzögerungsschaltung 500 bewirkt. Über einen Mikrocontroller 552, der vorzugsweise einen digitalen Signalprozessor umfasst, wird die Verzögerungsdauer der Verzögerungsschaltung 500 beeinflusst. Dies erfolgt über einen ersten analogen Ausgang 554 des Mikrocontrollers 552. Über einen zweiten analogen Ausgang 560 werden die von einem Verstärker 556 verarbeiteten I- beziehungsweise Q-Signale durch eine weitere, vorzugsweise veränderbare Verstärkung in dem Verstärker 558 beeinflusst. Dieser Verstärker 558 wird von einem zweiten analogen Ausgang 560 des Mikrocontrollers 552 gesteuert. Das Ausgangssignal des Verstärkers 558 wird einem analogen Eingang 562 des Mikrocontrollers 552 zugeführt. Der Mikrocontroller 552 kommuniziert über einen Eingabe-Ausgabe-Bus 564 mit der Steuereinrichtung 522. Die Radareinrichtung 520 umfasst weiter ein sogenanntes Notchfilter 566, das insbesondere zum Ausblenden monochromatischer oder nahezu monochromatischer Störsignale geeignet ist. Weiterhin sind eine PLL-Schaltung 568 und ein weiterer Mischer 570 vorgesehen. Durch Durchstimmen der PLL-Schaltung 568 kann auf vorteilhafte Weise die Frequenz eines Störsignals bestimmt werden.

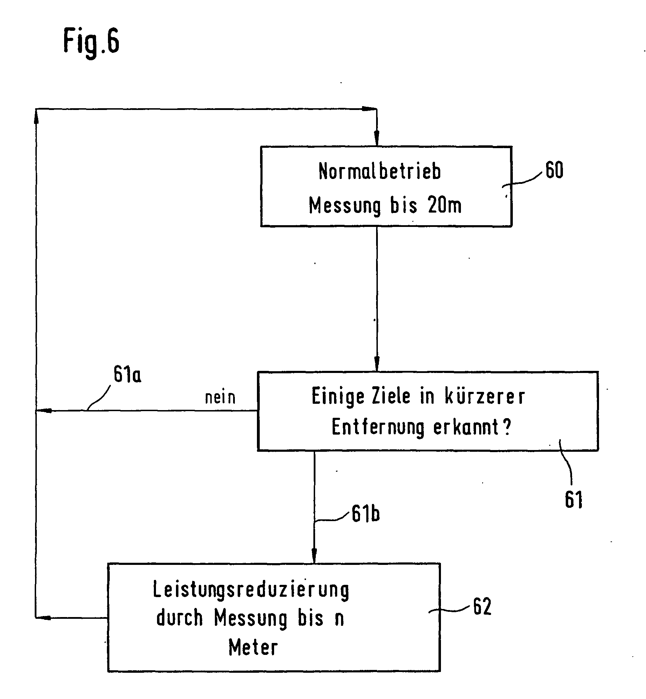

Mit der zuvor beschriebenen Einrichtung ist es demzufolge möglich, Störungen in dem empfangenen Signal festzustellen und die Art der Störung zu klassifizieren. Sobald nun festgestellt wird, dass die erkannten Störungen auf eine zu große Fahrzeugdichte zurückzuführen sind, wird erfindungsgemäß eine entsprechende Leistungsanpassung durchgeführt, die zu einer Verringerung der Störungen beitragen kann. Bei schon sicher erkannten Zielen kann vorzugsweise die Messwiederholrate verringert werden. Da hierdurch weniger Radarsignale ausgestrahlt werden, verringert sich auch die Wahrscheinlichkeit, dass Störungen verursacht werden. Weiterhin muss die mögliche Detektionsreichweite nicht bis zum maximalen Wert ausgenutzt werden. Sondern sie kann nach einer noch als zweckmäßig anzusehenden Grenze, von beispielsweise 2 bis 5 erkannten Zielen, abgebrochen werden, zumal der Leistungsbedarf mit der vierten Potenz der Entfernung ansteigt. Dies wird im Folgenden anhand des in Figur 6 dargestellten Ablaufdiagramms erläutert. In einem ersten Schritt 60 wird die Radareinrichtung 520 im Normalbetrieb betrieben. In diesem Normalbetrieb werden regelmäßig Messungen bis zu einer maximalen Reichweite von rund 20 m durchgeführt. In einem Schritt 61 wird geprüft, ob Ziele in einer kürzeren Entfernung erkannt worden sind. Sollte das nicht der Fall sein, wird der alternative Weg 61a gewählt und der Normalbetrieb gemäß Schritt 60 weitergeführt. Wenn dagegen Ziele in kürzerer Entfernung erkannt worden sind, wird der alternative Weg 61b gewählt und gemäß Schritt 62 eine Leistungsreduzierung dadurch herbeigeführt, dass nur noch Messungen bis zu einer Grenzentfernung von n m durchgeführt werden, mit n < 20 m. Durch erste Abschätzungen konnte nachgewiesen werden, dass bei Anwendung der erfinderischen Lösung, unter Annahme einer Maximalentfernung von 20 m und einem Abbrechen der Aussendungen in den Entfernungsstufen 5m, 10m oder 15 m, die mittlere Leistung um 30 db, 15 db, bzw. 6 dB reduziert werden könnte. Damit sinkt natürlich auch die spektrale Dichte. Zusätzlich könnte die ausgesandte Leistung um ca. 6 bis 20 dB gesenkt werden.

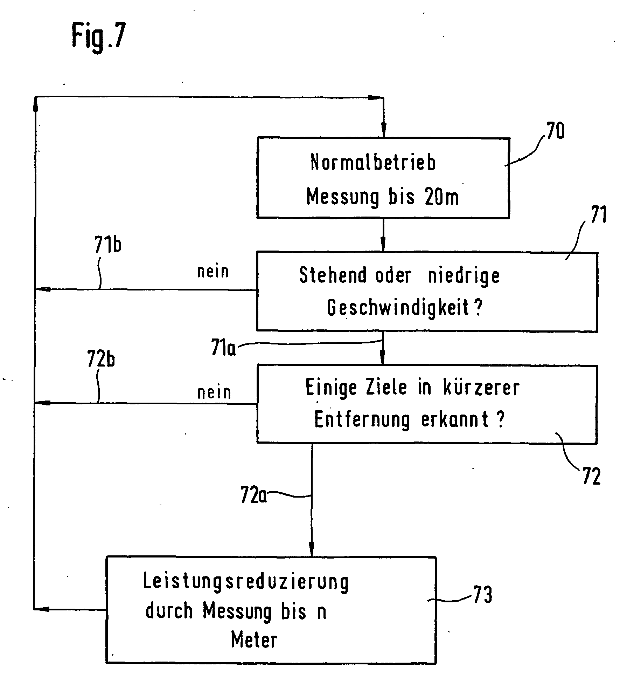

Eine alternative Lösung zur Leistungsreduzierung wird nun anhand des in Figur 7 dargestellten Ablaufdiagramms erläutert. In einem ersten Schritt 70 wird die Radareinrichtung 520 im Normalbetrieb betrieben. In diesem Normalbetrieb werden regelmäßig Messungen bis zu einer maximalen Reichweite von rund 20 m durchgeführt. In einem folgenden Schritt 71 wird geprüft, ob das Fahrzeug steht oder sich nur mit einer vergleichsweise niedrigen Geschwindigkeit fortbewegt. Sollte das nicht der Fall sein, wird der alternative Weg 71b gewählt und der Normalbetrieb gemäß Schritt 70 weitergeführt. Sofern jedoch nur eine geringe Geschwindigkeit unter etwa 20 bis 40 km/h gemessen wird, oder aber ein Stillstand des Fahrzeugs festgestellt wird, kann der alternative Weg 71a eingeschlagen werden, um zum Schritt 72 zu gelangen. In diesem Schritt 72 wird, analog zu Schritt 61 in dem zuvor beschriebenen Ausführungsbeispiel, wiederum geprüft, ob Ziele in einer kürzeren Entfernung als 20 m erkannt worden sind. Sollte dies der Fall sein, wird der alternative Weg 72a gewählt und gemäß Schritt 73 eine Leistungsreduzierung dadurch herbeigeführt, dass nur noch Messungen bis zu einer Grenzentfernung von n m durchgeführt werden, mit n < 20 m. Hierdurch ergeben sich die oben schon erwähnten Vorteile. Dank der relativ niedrigen Geschwindigkeit ist dabei kaum damit zu rechnen, dass Ziele unerwartet auftauchen. Falls erforderlich, kann jedoch auch bis zum ersten Ziel noch eine Messung zwischendurch erfolgen, um auch diesen Raum noch abzusichern und damit die Sicherheit insgesamt zu erhöhen. Sollte das jedoch nicht der Fall sein, wird der alternative Weg 72b gewählt und der Normalbetrieb gemäß Schritt 70 weitergeführt.

Auf besonders vorteilhafte Weise kann die Geschwindigkeitsinformation aus den Raddrehzahlen, aus einer Radarmessung, die die Geschwindigkeit über Grund erfasst oder einer SRR-Messung durch Abschätzung von stehenden Zielen gewonnen werden. Während die ersten zwei genannten Methoden zu sehr zuverlässigen Ergebnissen führen, ist bei der letztgenannten Methode zusätzlich eine genaue Klassifikation in Scheinziele einerseits und reale bewegte Ziele andererseits erforderlich , um zu zuverlässigen Ergebnissen zu gelangen. Da bei einer hohen Fahrzeugdichte und somit hoher Konzentration von Sensoren die störenden Beeinflussungen zunehmen, diese jedoch erkannt werden können, ermöglicht die Erfindung auch eine adaptive Reduktion der Leistung in kürzerer Entfernung, sofern sicher erkannte Ziele vorliegen. Die Erfindung ermöglicht eine Verringerung der Sendeleistung, wodurch eine Zulassung nach UWB-Kriterien erleichtert wird. Durch die Verringerung der Sendeleistung, kann die Störfestigkeit weiter gesteigert werden. Das heißt, dass sich benachbarte Fahrzeuge weniger gegenseitig stören. Die verringerte Sendeleistung führt zu einem energetisch günstigen geringeren Stromverbrauch. Weiterhin ist, infolge der geringeren Belastung, auch mit einer höheren Lebensdauer zu rechnen.

In einer bevorzugten Ausgestaltung wird auch nach Zurücknahme der Sendeleistung für jede Stufe der Sendeleistung die empfangenen Signale auf Unregelmäßigkeiten geprüft und die Sendeleistung auf die nächst höhere Stufe angehoben, wenn in den empfangenen Signalen keine Unregelmäßigkeiten mehr festgestellte werden.

Ferner ist in einer Ausführung vorgesehen, dass weitere Messwerte aus dem Verkehrsumfeld, wie erfasster Verkehrslärm und/oder Lichtabstrahlungen benachbarter Verkehrsteilnehmer für die Feststellung der Fahrzeugdichte und des von der Fahrzeugdichte abhängigen potentiellen Störpotentials herangezogen werden.

### Bezugszeichenliste

- 1: Sendeeinrichtung
- 2: Pulsgenerator
- 4: Antenne
- 6: Sendesignal
- 8: Zielobjekt
- 10: Empfangssignal
- 12: Antenne
- 14: Empfangseinrichtung
- 16: Filtereinrichtung mit A/D-Wandlung
- 18: Auswerteeinrichtung
- 19: Referenzsignal
- 20: Kraftfahrzeug
- 21: Radarsensor
- 24: Einrichtung Einparkhilfe
- 26: Einrichtung Stop&Go-Verkehr
- 28: Einrichtung Precrash-Funktion
- 60: Schritt
- 61: Schritt
- 61a: Weg
- 61b: Weg .
- 62: Schritt
- 70: Schritt
- 71: Schritt
- 71a: Weg
- 71b: Weg
- 72: Schritt
- 72a: Weg
- 72b: Weg
- 73: Schritt
- 74: Schritt
- ES1: Empfangssignal
- ES2: Empfangssignal
- ES3: Empfangssignal
- 500: Verzögerungsschaltung
- 520: Radareinrichtung
- 522: Steuereinrichtung
- 524: DC-DC-Wandler
- 526: Lokaloszillator
- 528: Taktgenerator
- 530: Wandler
- 532: Schalter
- 534: Antenne
- 536: Empfangsantenne
- 538: Verstärker
- 540: Mischer
- 542: Mischer
- 544: Schalter
- 546: Impulsgeber
- 548: Impulsgeber
- 552: Mikrocontroller
- 554: Ausgang analog
- 556: Verstärker
- 558: Verstärker
- 560: Ausgang analog
- 562: Eingang analog
- 564: Eingabe-Ausgabe-Bus
- 566: Notchfilter
- 568: PLL-Schaltung
- 570: Mischer

## Patentansprüche

1. Verfahren zur adaptiven Leistungsregelung bei einer einen Radarsensor und einen Radarempfänger umfassenden Radareinrichtung (520), insbesondere für mobile Anwendungen im Automotivbereich, bei der Radarsignale ausgesandt und von Zielobjekten reflektierte Radarsignale empfangen werden, wobei die empfangenen Signale auf Unregelmäßigkeiten geprüft werden, **dadurch gekennzeichnet, dass** die Sendeleistung des Radarsenders reduziert wird, sofern Unregelmäßigkeiten auftreten, diese Unregelmäßigkeiten auf Störungen durch benachbarte Radarsender zurückführbar sind und Zielobjekte erkannt wurden.

2. Verfahren nach Anspruch 1, **dadurch gekennzeichnet, dass** die Wiederholrate der Messungen reduziert wird.

3. Verfahren nach einem der Ansprüche 1, 2, **dadurch gekennzeichnet, dass** bei Stillstand des Fahrzeugs oder bei nur vergleichsweise geringer Geschwindigkeit des Fahrzeugs die Sendeleistung des Radarsenders derart stark reduziert wird, dass nur noch ein Bruchteil der bei normaler Sendeleistung erreichbaren Reichweite abgedeckt wird.

4. Verfahren nach einem der Ansprüche 1 bis 3, **dadurch gekennzeichnet, dass** die Sendeleistung, ausgehend von der Maximalleistung in Stufen derart reduziert wird, dass die Sendeleistung auf die nächst niedrige Stufe zurückgenommen wird, wenn in dem zuvor mit der nächsthöheren Stufe der Sendeleistung durchgeführten Messvorgang kein Ziel erfasst worden ist.

5. Verfahren nach einem der vorhergehenden Ansprüche, **dadurch gekennzeichnet, dass** nach Zurücknahme der Sendeleistung auf eine niedrigere Stufe die Sendeleistung in periodischen Abständen kurzzeitig auf eine höhere Stufe, insbesondere die maximale Sendeleistung, angehoben wird, um die Entdeckungswahrscheinlichkeit weiter entfernter Ziele zu erhöhen.

6. Verfahren nach einem der vorhergehenden Ansprüche, **dadurch gekennzeichnet, dass** auch nach Zurücknahme der Sendeleistung für jede Stufe der Sendeleistung die empfangenen Signale auf Unregelmäßigkeiten geprüft werden und dass die Sendeleistung auf die nächst höhere Stufe angehoben wird, wenn in den empfangenen Signalen keine Unregelmäßigkeiten mehr festgestellt werden.

7. Verfahren nach einem der vorhergehenden Ansprüche, **dadurch gekennzeichnet, dass** weitere Messwerte aus dem Verkehrsumfeld, wie erfasster Verkehrslärm und oder Lichtabstrahlungen benachbarter Verkehrsteilnehmer für die Feststellung der Fahrzeugdichte und des von der Fahrzeugdichte abhängigen potentiellen Störpotentials herangezogen werden.

8. Einrichtung zur adaptiven Leistungsregelung bei einer einen Radarsender und einen Radarempfänger umfassenden Radareinrichtung (520), insbesondere für mobile Anwendungen im Automotivbereich, bei der Radarsignale ausgesandt und von Zielobjekten reflektierte Radarsignale empfangen werden, wobei die Einrichtung Mittel zur Überprüfung der empfangenen Signale auf Unregelmäßigkeiten umfasst, **dadurch gekennzeichnet, dass** die Einrichtung Mittel umfasst, die die Sendeleistung des Radarsenders reduzieren, sofern Unregelmäßigkeiten auftreten, diese Unregelmäßigkeiten auf Störungen durch benachbarte Radarsender zurückführbar sind und Zielobjekte erkannt wurden.

9. Einrichtung nach Anspruch 8, **dadurch gekennzeichnet, dass** sie eine PLL-Schaltung (568), sowie einen Mischer (570) zur Bestimmung der Frequenz von Störsignalen umfasst.

## Claims

1. Adaptive power control method for a radar device (520) which comprises a radar transmitter and a radar receiver, in particular for mobile applications in the field of automotives, in which radar signals are emitted and radar signals which are reflected by target objects are received, wherein the received signals are checked for irregularities, **characterized in that** the transmission power of the radar transmitter is reduced if irregularities occur, these irregularities can be traced back to interference from adjacent radar transmitters and target objects have been detected.

2. Method according to Claim 1, **characterized in that** the repetition rate of the measurements is reduced.

3. Method according to one of Claims 1, 2, **characterized in that** when the vehicle is stationary or in the case of only a comparatively low velocity of the vehicle, the transmission power of the radar transmitter is reduced to such a degree that only a fraction of the range which can be achieved with the normal transmission power is covered.

4. Method according to one of Claims 1 to 3, **characterized in that** the transmission power is reduced in stages starting from the maximum power in such a way that the transmission power is decreased to the next lowest stage if a target has not been sensed in the measuring process carried out previously with the next highest stage of the transmission power.

5. Method according to one of the preceding claims, **characterized in that**, after the transmission power has been decreased to a relatively low stage, the transmission power is briefly raised at periodic intervals to a relatively high stage, in particular the maximum transmission power, in order to increase the probability of discovering more remote targets.

6. Method according to one of the preceding claims, **characterized in that** even after the transmission power has been decreased for each stage of the transmission power, the received signals are checked for irregularities, and **in that** the transmission power is raised to the next highest stage if no irregularities are detected any more in the received signals.

7. Method according to one of the preceding claims, **characterized in that** further measured values are used from the surrounding traffic, such as sensed traffic noise and/or light emitted by adjacent road users, for the detection of the vehicle density and interference potential which is dependent on the vehicle density.

8. Adaptive power control device in a radar device (520) which comprises a radar transmitter and a radar receiver, in particular for mobile applications in the field of automotives, in which radar signals are emitted and radar signals which are reflected by target objects are received, wherein the device comprises means for checking the received signals for irregularities, **characterized in that** the device comprises means which reduce the transmission power of the radar transmitter if irregularities occur, these irregularities can be traced back to interference from adjacent radar transmitters and target objects have been detected.

9. Device according to Claim 8, **characterized in that** it comprises a PLL circuit (568) and a mixer (570) for determining the frequency of interference signals.

## Revendications

1. Procédé de régulation adaptative de la puissance d'une installation radar (52) comportant un radar de détection et un radar de réception, notamment pour des applications mobiles dans le domaine automobile, selon lequel on émet des signaux radar et on reçoit les signaux radar réfléchis par les objets cibles, selon lequel on contrôle les irrégularités des signaux reçus,
**caractérisé en ce qu'**
on réduit la puissance d'émission du radar émetteur dans la mesure où l'on rencontre des irrégularités, si ces irrégularités proviennent de perturbations de radars d'émission voisins et si les objets cibles ont été reconnus.

2. Procédé selon la revendication 1,
**caractérisé en ce qu'**
on réduit le taux de répétition des mesures.

3. Procédé selon l'une des revendications 1 et 2,
**caractérisé en ce qu'**
à l'arrêt du véhicule ou si le véhicule ne circule qu'à une vitesse relativement faible, on réduit fortement la puissance d'émission du radar d'émission de façon que seulement une fraction de la portée possible pour une puissance d'émission normale soit couverte.

4. Procédé selon l'une des revendications 1 à 3,
**caractérisé en ce que**
partant de la puissance maximale, on réduit la puissance d'émission par palier, de façon à réduire la puissance d'émission du niveau directement en dessous de la puissance d'émission, si l'opération de mesure n'a saisi aucune cible.

5. Procédé selon l'une des revendications précédentes,
**caractérisé en ce qu'**
après réduction de la puissance d'émission à un niveau plus bas, on relève la puissance d'émission à des intervalles périodiques, brièvement à un niveau supérieur, notamment à la puissance d'émission maximale, pour augmenter la probabilité de détection de cibles plus éloignées.

6. Procédé selon l'une des revendications précédentes,
**caractérisé en ce qu'**
également après réduction de la puissance d'émission, pour chaque niveau de la puissance d'émission, on vérifie les irrégularités des signaux reçus et on relève la puissance d'émission au niveau directement au-dessus si l'on ne constate pas d'irrégularités dans les signaux reçus.

7. Procédé selon l'une des revendications précédentes,
**caractérisé en ce qu'**
on utilise d'autres valeurs de mesure du domaine environnant telles que la saisie du bruit de circulation ou le rayonnement lumineux de participants à la circulation, voisins, pour constater la densité de circulation et le potentiel de perturbations éventuelles dépendant de la densité de circulation.

8. Installation de régulation adaptative de puissance d'une installation radar (520) comportant un radar d'émission et un radar de réception, notamment pour les applications mobiles dans le domaine automobile, selon lequel on émet des signaux radars et on reçoit les signaux radars réfléchis par les objets cibles, selon lequel, l'installation comporte des moyens pour vérifier les signaux reçus quant à des irrégularités,
**caractérisée en ce qu'**
elle comprend des moyens qui réduisent la puissance d'émission du radar d'émission dans la mesure où l'on constate des irrégularités, et si ces irrégularités proviennent de perturbations engendrées par des radars d'émission voisins et si des objets cibles ont été détectés.

9. Installation selon la revendication 8,
**caractérisée en ce qu'**
elle comprend un circuit PLL (568) ainsi qu'un mélangeur (570) pour déterminer la fréquence des signaux parasites.
